(19) Europäisches Patentamt
European Patent Office
Office européen des brevets

(11) EP 3 470 481 A1

(12) EUROPEAN PATENT APPLICATION

(43) Date of publication:
**17.04.2019 Bulletin 2019/16**

(51) Int Cl.:
***C09D 167/08*** *(2006.01)*

(21) Application number: **17196061.0**

(22) Date of filing: **12.10.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Jotun A/S**
**3202 Sandefjord (NO)**

(72) Inventor: **The designation of the inventor has not yet been filed**

(74) Representative: **Gordon, Kirsteen Helen**
**Marks & Clerk LLP**
**62-68 Hills Road**
**Cambridge CB2 1LA (GB)**

# (54) COMPOSITION

(57) The present invention provides a coating composition comprising:
(i) at least one oxidative drying alkyd resin;
(ii) at least one clay; and
(iii) water;
wherein said composition has a solids content of less than 35 wt%, and preferably a solids content of less than 35 vol%.



Printed by Jouve, 75001 PARIS (FR)

## Description

### INTRODUCTION

The present invention relates to a coating composition comprising at least one oxidative drying alkyd resin, at least one clay and water, and which has a solids content of less than 35 wt% as well as to methods of preparing such compositions. Advantageously the composition is readily applicable to surfaces, e.g. wood, and has a low level of tackiness once applied. The invention also relates to a stain, varnish, lacquer or glaze, for interior or exterior use, comprising the composition and to a container comprising the composition. Additionally, the invention relates to a surface having a film thereon and to an article comprising a film on at least a part of a surface of the article, wherein the films comprise the composition. Furthermore, the invention relates to a method of protecting an article from degradation, e.g. due to UV, water, rot mold or algae, comprising applying a film of the composition.

### BACKGROUND

Waterborne alkyd resins are commonly used to protect surfaces such as wood. Alkyd resin-containing compositions are typically applied to wood by brushing or rolling and the alkyd resin forms a film, e.g. of up to 120 μm thick, thereon. The alkyd resin penetrates into the wood and protects the wood against water absorbance.
Many alkyd resin-containing compositions comprise 25-40 wt% organic solvent. This is because organic solvent readily evaporates and thereby facilitates formation of a film. There is, however, a need to develop waterborne alkyd resin-containing compositions that have a low content of volatile organic compounds (VOCs) in light of the stricter regulations on the emission of VOCs requiring the level of organic solvent in coating compositions to be reduced.
Alkyd resin-containing compositions dry by simultaneous evaporation of the solvent, e.g. water, and autoxidation and cross linking of unsaturated fatty acids within the alkyd resin. Metal catalysts are often used to accelerate the drying process. Absorption of oxygen from the air causes peroxide formation and peroxide decomposition which results in the generation of free radicals that initiate cross-linking and formation of cross-links. The cross-linking reactions and solvent evaporation means that eventually a solidified air-dried film is formed.
The time for an alkyd-resin composition to dry, i.e. to form a dry film, depends on the concentration and type of unsaturated fatty acids present in the resin. Autoxidation and crosslinking of the unsaturated fatty acid component can proceed unaided, but the time for drying is often too long for many practical purposes. This is often the case with low solids content, waterborne alkyd resin compositions because water evaporates less readily than organic solvents and because a significant amount of water needs to evaporate. Unacceptably long drying time is also a problem often encountered with alkyd resin compositions comprising long oil alkyds, regardless of their solids content.
Whilst the simultaneous autoxidation, crosslinking and drying processes are ongoing, a problem often encountered is that the incompletely dried film is tacky or sticky. This means that the partially dried film is easily marked. For instance, the partially dried film may hold fingerprints and dirt will tend to stick to the film. Unfortunately, any imperfections introduced into the film during the drying stage tend to remain in the final film and its aesthetic appearance is diminished.
A number of different metal-based drying catalysts, commonly referred to as "driers", have been employed to reduce the drying time of alkyd resins. The metal within the drying catalyst catalyses autoxidation by forming a complex with both atmospheric oxygen and the double bonds of the unsaturated fatty acid groups within the composition. However in the case of low solids content, waterborne alkyd resin compositions as well as alkyd resin compositions comprising long oil alkyds, the presence of a drier does not always overcome the problem of imperfections in the film arising as a result of the tackiness of the partially dried film as drying may still take several hours.

### SUMMARY OF THE INVENTION

Viewed from a first aspect, the present invention provides a coating composition comprising:

(i) at least one oxidative drying alkyd resin;
(ii) at least one clay; and
(iii) water;

wherein said composition has a solids content of less than 35 wt%.
Viewed from a further aspect, the present invention provides a method for preparing a composition as hereinbefore defined, comprising mixing:

(i) at least one oxidative drying alkyd resin;
(ii) at least one clay; and

(iii) water.

Viewed from a further aspect, the present invention provides a stain, varnish, lacquer or glaze, comprising a composition as hereinbefore defined.
Viewed from a further aspect, the present invention provides a container comprising a composition as hereinbefore defined.
Viewed from a further aspect, the present invention provides a surface having a film thereon, wherein said film comprises the composition as hereinbefore defined.
Viewed from a further aspect, the present invention provides an article comprising a film on at least a part of a surface thereof, wherein said film comprises the composition as hereinbefore defined.
Viewed from a further aspect, the present invention provides a method of providing a coating on an article (e.g. to prevent degradation of the article), wherein said method comprises:

applying a composition as hereinbefore defined to at least a part of a surface of said article; and
drying and/or curing said composition to form a film on said surface.

Viewed from a further aspect, the present invention provides the use of a composition as hereinbefore defined for forming a film on at least a part of a surface of an article (e.g. to prevent degradation thereof).

DEFINITIONS

As used herein the term "coating composition" refers to a composition that, when applied to a surface, forms a film or coating thereon.
As used herein the term "alkyd resin" refers to a polyester modified by the addition of at least one oil and/or fatty acid.
As used herein the term "oxidative drying alkyd resin" refers to an alkyd resin that undergoes air oxidation when oxygen in the air reacts with unsaturated groups in its structure. Herein the term "oxidative drying alkyd resin" is used synonymously with "autoxidative drying alkyd resin". The oxidation reaction, in conjunction with solvent evaporation, converts liquid resins to solid films over time.
As used herein the term "oil length" is equal to the weight of any fatty acid in the alkyd taken together with the polyol needed to completely esterify the fatty acid, minus the weight of water generated during esterification, expressed as a percentage of the total solids content of the finished alkyd.
As used herein the term "weight % (wt%)", when used in relation to individual constituents of the composition, e.g. biocide, drier etc, refers to the actual weight of constituent, i.e. without volatile components present, unless otherwise specified.
As used herein the term "weight % (wt%)", when used in relation to the coating compositions, refers to the weight relative to the total weight of the composition, i.e. including non-volatile and volatile components, unless otherwise specified.
As used herein the term "solids content" refers to the proportion of non-volatile material present in a composition. The proportion may be defined in terms of wt% or vol%.
As used herein the term "waterborne alkyd emulsion" refers to an alkyd-containing emulsion wherein the continuous phase is water.
As used herein the term "waterborne composition" or "waterborne coating composition" refers to a composition wherein at least 50 wt% of the solvent is water.
As used herein the term "alkyl" refers to saturated, straight chained, branched or cyclic groups. Alkyl groups may be substituted or unsubstituted.
As used herein the term "cycloalkyl" refers to saturated or partially saturated mono- or bicyclic alkyl ring systems containing 3 to 10 carbon atoms. Cycloalkyl groups may be substituted or unsubstituted.
As used herein the term "alkenyl" refers to unsaturated, straight chained, branched or cyclic groups. Alkenyl groups may be substituted or unsubstituted.
As used herein the term "aromatic" refers to a compound comprising 4n+2, wherein n is an integer of 1 or more, pi electrons in a conjugated arrangement.
As used herein the term "substituted" refers to a group wherein one or more, for example up to 6, more especially 1, 2, 3, 4, 5 or 6, of the hydrogen atoms in the group are replaced independently of each other by the corresponding number of the described substituents. The term "optionally substituted" as used herein means substituted or unsubstituted.
As used herein the term "polycarboxylic acid" refers to a compound comprising more than one -COOH group.
As used herein the term "polyol" refers to a compound comprising more than one -OH group.

As used herein the term "clay" refers to phyllosilicates characterized by the presence of layered structures composed of polymeric sheets containing $SiO_4$ tetrahedra linked with metal-containing octahedral sheets.

As used herein the terms, "stain, lacquer, varnish and glaze" refer to a composition comprising the coating composition as herein described and optionally solvent which is ready for use, e.g. for applying by brushing or rolling. Thus, the coating composition may itself be a stain, lacquer, varnish or glaze, or the coating composition may be a concentrate to which solvent, e.g. water, is added to produce a stain, lacquer, varnish or glaze.

As used herein the term "molecular weight" refers to weight average molecular weight (Mw), unless otherwise specified.

As used herein the term "PDI" or "polydispersity index" refers to the ratio Mw/Mn, wherein Mn refers to number average molecular weight.

As used herein the term "latex" refers to a suspension comprising a polymer, wherein the polymer comprises at least 50 wt% acrylic monomers and optionally monomers selected from vinyl acetate, styrene acrylic and urethane acrylic.

As used herein the term "tackiness" refers to a measure of the stickiness or adhesiveness of an incompletely dried and/or cured film.

## DETAILED DESCRIPTION OF THE INVENTION

The present invention relates to a coating composition comprising:

(i) at least one oxidative drying alkyd resin;
(ii) at least one clay; and
(iii) water;

wherein said composition has a solids content of less than 35 wt%.

Optionally the composition further comprises one or more of: (iv) a drier (v) a thickener; (vi) a biocide; (vii) a pigment; (vii) an organic solvent and (viii) an additive.

In the coating compositions of the present invention, which have a relatively low solids content of less than 35 wt%, the presence of the clay in combination with the waterborne alkyd resin advantageously reduces the tackiness of the composition when it is applied to a surface such as wood. This means that the coating composition is less tacky or sticky after it is applied than if the clay were not present and that consequently the film picks up less dirt during the drying phase. This leads to a film having an improved aesthetic appearance. Advantageously the films of the present invention produce a natural wood appearance and, for example, reduce the yellowing effect commonly associated with the use of alkyd resins.

The problem of tackiness and poor aesthetic appearance is particularly associated with waterborne auto-oxidative drying alkyd resin-containing compositions that have relatively low solids content as well as with alkyd resin-containing compositions comprising long oil alkyds. Such compositions comprise significant amounts of water that must evaporate during the various stages of the drying process. The drying process can therefore be several hours long (dry to touch e.g. 1-16 hours, depending on the temperature and humidity) even in the presence of a drier. Preferred compositions of the present invention have a solids content of 5 to 30 wt%, more preferably 7 to 28 wt% and still more preferably 10 to 25 wt%. In such compositions, the clay has its maximum benefit.

Further preferred compositions of the present invention have a solids content of less than 35 vol%. Preferably the coating compositions of the present invention have a solids content of 5 to 30 vol%, more preferably 10 to 25 vol% and still more preferably 12 to 25 vol%.

Still further preferred compositions of the present invention have a solids content of 5 to 30 wt% and 5 to 30 vol%, more preferably 7 to 28 wt% and 10 to 25 vol% and still more preferably 10 to 25 wt% and 12 to 25 vol %.

### Alkyd Resin

In preferred compositions of the present invention the alkyd resin is derived from at least a polycarboxylic acid and/or anhydride, a polyol and an unsaturated fatty acid or oil. Preferably the unsaturated fatty acid or oil is a vegetable oil and/or fatty acids present in vegetable oil. Optionally the alkyd resin further comprises one or more monoacids.

The polycarboxylic acid is preferably a triacid or a diacid and more preferably a diacid. The polycarboxylic acid is preferably an alkyl polycarboxylic acid or an aromatic polycarboxylic acid. Alkyl polycarboxylic acids include acyclic and cyclic polycarboxylic acids. Preferred polycarboxylic acids are $C_{3-12}$ polycarboxylic acids and more preferably $C_{4-10}$ polycarboxylic acids. The anhydride is preferably a $C_{4-10}$ cyclic anhydride.

Representative examples of suitable polycarboxylic acids include o-phthalic acid, isophthalic acid, adipic acid, succinic acid, terephthalic acid, 1,4-cyclohexanedicarboxylic acid, hexahydrophthalic acid, citric acid, fumaric acid, mesaconic acid, maleic acid, citraconic acid, 5-tert-butyl isophthalic acid, trimellitic acid, pyromellitic acid, 2,2,4-trimethyl adipic acid, azelaic acid, sebacic acid, dimerized fatty acids, cyclopentane-1,2-dicarboxylic acid, cyclohexane-1,2-dicarboxylic acid, 4-methylcyclohexane-1,2- dicarboxylic acid, tetrahydrophthalic acid, endomethylene-cyclohexane-1,2-dicarboxylic acid, butane-1,2,3,4-tetra-carboxylic acid, endoisopropylidene-cyclohexane-1,2-dicarboxylic acid, cyclohexane-1,2,4,5-tetracarboxylic acid, butane-1,2,3,4-tetracarboxylic acid, 1,2-cyclohexanedicarboxylic acid, 1,3-cyclohexanedicarboxylic acid, furandicarboxylic acids, tetrahydrofurandicarboxylic acids, itaconic acid, citraconic acid and dimer fatty acid.

Representative examples of suitable anhydrides include o-phthalic anhydride, succinic anhydride, hexahydrophthalic anhydride, maleic anhydride, trimellitic anhydride, pyromellitic anhydride, cyclopentane-1,2-dicarboxylic anhydride, cyclohexane-1,2-dicarboxylic anhydride, 4-methylcyclohexane-1,2-dicarboxylic anhydride, tetrahydrophthalic anhydride, endomethylene-cyclohexane-1,2-dicarboxylic anhydride, endoisopropylidene-cyclohexane-1,2-dicarboxylic anhydride, 1,2-cyclohexanedicarboxylic anhydride, itaconic anhydride and lactide.

In preferred compositions of the present invention, the alkyd resin comprises a polycarboxylic acid and/or anhydride selected from o-phthalic acid, isophthalic acid, adipic acid, succinic acid, terephthalic acid, 1,4-cyclohexanedicarboxylic acid, hexahydrophthalic acid, dimer fatty acid, succinic anhydride, o-phthalic anhydride, hexahydrophthalic anhydride and maleic anhydride.

The polyol present in the alkyd resin preferably comprises 2-6 hydroxyl groups. More preferably the polyol is a diol, triol or tetrol. The polyol is preferably an aromatic polyol, an alkyl polyol or a cycloalkyl polyol. Preferred polyols are alkyl polyols and cycloalkyl polyols. Preferred alkyl polyols are $C_{2-12}$ polyols and more preferably $C_{3-10}$ polyols. Preferred cycloalkyl polyols are $C_{5-12}$ polyols and more preferably $C_{6-10}$ polyols.

Representative examples of suitable polyols include alkylene glycols, poly(alkylene) glycols, polycarbonate polyols, dihydroxyalkyl-1,3-dioxanes, di(hydroxyalkyl)furans, di(hydroxyalkyl)tetrahydrofurans, 2-alkyl-1,3-propanediols, 2,2-dialkyl-1,3-propanediols, 2-hydroxyalkyl-1,3-propanediols, 2,2-dihydroxyalkyl-1,3-propanediols, 2-alkyl-2-hydroxyalkyl-1,3-propanediols, ethylene glycol, propylene glycol, 1,3-propanediol, 1,4-butylene glycol, 1,3-butylene glycol, neopentyl glycol, 2-butyl-2-ethyl-1,3-propanediol, 1,6-hexane diol, 1,12-dodecane diol, 3-methyl-1,5-pentane diol, 2,2,4-trimethyl-1,6-hexane diol, 2,2-dimethyl-1,3-propane diol, 2-methyl-2-cyclohexyl-1,3-propane diol, 1,4-cyclohexane dimethanol, glycerol, trimethylol ethane, trimethylol propane, pentaerythritol, sorbitol 5,5-dihydroxymethyl-1,3-dioxane, di(hydroxymethyl)furan, di(hydroxymethyl) tetrahydrofuran, spiroglycol (2,4,8,10-tetraoxaspiro[5.5]undecane-3,9-diethanol), isosorbide, isomannide, isoidide, di-glycerol, trimethylolbutane, di-trimethylolethane, di-trimethylolpropane, di-trimethylolbutane, di-pentaerythritol, tri-pentaerythritol, anhydroennea-heptitol, mannitol, glycerol mono(meth)allyl ether, di-glycerol di(meth)allyl ether, trimethylolethane mono(meth)allyl ether, trimethylolpropane mono(meth)allyl ether, trimethylolbutane mono(meth)allyl ether, pentaerythritol mono(meth)allyl ether, pentaerythritol di(meth)allyl ether, di-trimethylolethane mono(meth)allyl ether, di-trimethylolethane di(meth)allyl ether, di-trimethylolpropane mono(meth)allyl ether, di-trimethylolpropane di(meth)allyl ether, di-trimethylolbutane mono(meth)allyl ether, and/or di-trimethylolbutane di(meth)allyl ether.

In preferred compositions of the present invention, the alkyd resin comprises a polyol selected from pentaerythritol, di-pentaerythritol, glycerol, ethylene glycol, propylene glycol, 1,4-cyclohexane dimethanol, trimethylol propane, 1,2-propanediol and 2-butyl-2-ethyl-1,3-propanediol.

In further preferred compositions of the invention, the alkyd resin comprises a polycarboxylic acid and/or anhydride selected from o-phthalic acid, isophthalic acid, adipic acid, succinic acid, terephthalic acid, 1,4-cyclohexanedicarboxylic acid, hexahydrophthalic acid, succinic anhydride, o-phthalic anhydride, hexahydrophthalic anhydride and maleic anhydride and a polyol selected from pentaerythritol, di-pentaerythritol, glycerol, ethylene glycol, propylene glycol, 1,4-cyclohexane dimethanol, trimethylol propane, 1,2-propanediol and 2-butyl-2-ethyl-1,3-propanediol.

The unsaturated fatty acid or oil (unsaturated triglyceride) present in the alkyd resin is preferably a $C_{8-24}$, more preferably a $C_{12-24}$ and still more preferably a $C_{14-24}$ unsaturated fatty acid. The unsaturated fatty acid preferably comprises 1, 2 or 3 double bonds. When multiple double bonds are present, they may be conjugated or non-conjugated. The double bonds may have cis or trans geometry.

Representative examples of suitable unsaturated fatty acids include linolenic, linoleic, oleic, myristoleic, palmitoleic, arachidonic, erucic, gadoleic, clupanadonic, ricinoleic, licanic, nisinic, eleostearic, stearidonic, eicosapentaenoic, docosahexaenoic, docosatetraenoic, vaccenic, paullinic, elaidic, gondoic, nervonic and mead acids, soy bean fatty acid, tall oil fatty acid, or mixtures thereof. Preferably the unsaturated fatty acid is selected from linolenic, linoleic and oleic acids, soy bean fatty acid, tall oil fatty acid, and mixtures thereof.

Preferably a mixture of fatty acids will be present in the alkyd resin. Typically the fatty acid is derived from natural or synthetic oils and thus the mixture of fatty acids present in the alkyd resin reflects the mixture present in the oil. Saturated fatty acids and oils may optionally be present. Examples of suitable oils for providing fatty acid groups in alkyd resin include linseed oil, soybean oil, rapeseed oil, sun flower oil, palm oil, tung oil, calendula oil, wood oil (e.g. pine oil), safflower oil, tuna fish oil, and combinations thereof. Preferably the oil is selected from rapeseed oil, linseed oil, sunflower oil and soybean oil.

In further preferred compositions of the invention, the alkyd resin comprises a polycarboxylic acid and/or anhydride selected from o-phthalic acid, isophthalic acid, adipic acid, succinic acid, terephthalic acid, 1,4-cyclohexanedicarboxylic acid, hexahydrophthalic acid, succinic anhydride, o-phthalic anhydride, hexahydrophthalic anhydride and maleic anhydride, a polyol selected from pentaerythritol, di-pentaerythritol, glycerol, ethylene glycol, propylene glycol, 1,4-cyclohexane dimethanol, trimethylol propane, and 2-butyl-2-ethyl-1,3-propanediol and unsaturated fatty acids selected from linolenic, linoleic, oleic, myristoleic, palmitoleic, arachidonic, erucic, gadoleic, clupanadonic, ricinoleic, licanic, nisinic acid, eleostearic, stearidonic, eicosapentaenoic acid, docosahexaenoic acid, docosatetraenoic, vaccenic, paullinic, elaidic, gondoic, nervonic and mead acids or mixtures thereof.

The alkyd resins present in the compositions of the invention are prepared by polymerisation. The polymerisation is preferably random. This is because: (i) at least some of the monomers from which the alkyd resin is derived contain more than 2 reactive groups; (ii) at least some of the compounds from which the alkyd resin is derived contain only 1 reactive group and (iii) optionally other units are incorporated into the structure (see below). The monomers containing more than 2 reactive groups generate branches in the alkyd resin and the compounds with a single reactive group stop chain growth. The net effect is that the chains present within the alkyd resin structure are varied, e.g. in terms of units present and in length. Cross links may also form. For this reason, it is most appropriate to describe the alkyd resins in terms of the monomers from which they are preferably derived.

In preferred compositions of the present invention the alkyd resin is derived from at least one monomer of formula (I):

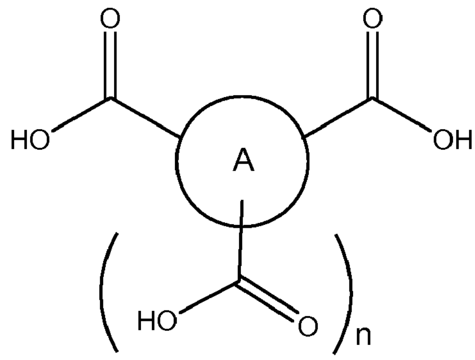

(I)

wherein

A is an organic group; and
n is 0, 1 or 2.

In preferred compositions of the invention, A is an organic group selected from $C_{5-10}$ aryl, $C_{5-10}$ cycloalkyl and $C_{1-20}$ alkyl. More preferably A is an organic group selected from $C_6$ aryl, $C_6$ cycloalkyl and $C_{2-10}$ alkyl.

In further preferred compositions of the invention, n is 0 or 1. When n is 1 or more, the alkyd resin is branched.

In particularly preferred compositions of the invention, the alkyd resin is derived from at least two different monomers of formula (I). For example, the alkyd resin may derive from 2, 3 or 4 different monomers of formula (I).

In further preferred compositions of the present invention the alkyd resin is derived from at least one monomer of formula (II):

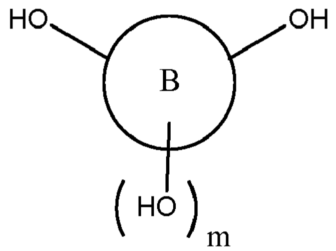

(II)

wherein

B is an organic group; and

m is 0, 1, 2, 3 or 4.

In preferred compositions of the invention, B is an organic group selected from $C_{5-10}$ cycloalkyl and $C_{1-18}$ alkyl. More preferably B is an organic group selected from $C_6$ cycloalkyl and $C_{2-10}$ alkyl.

In further preferred compositions of the invention, m is 1, 2, 3 or 4. When m is 1, 2, 3 or 4, the alkyd resin is branched.

In particularly preferred compositions of the invention, the alkyd resin derives from at least two different monomers of formula (II). For example, the alkyd resin may derive from 2, 3 or 4 different monomers of formula (II).

In particularly preferred compositions of the invention, the alkyd resin derives from at least two different monomers of formula (I) and at least two different monomers of formula (II). For example, the alkyd resin may derive from 2, 3 or 4 different monomers of formula (I) and 2, 3, or 4 different monomers of formula (II).

Preferably the alkyd resin is a random, branched copolymer.

In further preferred compositions of the present invention the alkyd resin further derives from $C_{8-24}$, more preferably a $C_{12-24}$ and still more preferably a $C_{14-24}$ unsaturated fatty acid. The unsaturated fatty acid preferably comprises 1, 2 or 3 double bonds. When multiple double bonds are present, they may be conjugated or non-conjugated. The double bonds may have cis or trans geometry.

Representative examples of suitable unsaturated fatty acids include linolenic, linoleic, oleic, myristoleic, palmitoleic, arachidonic, erucic, gadoleic, clupanadonic, ricinoleic, licanic, nisinic, eleostearic, stearidonic, eicosapentaenoic, docosahexaenoic, docosatetraenoic, vaccenic, paullinic, elaidic, gondoic, nervonic and mead acids, soy bean fatty acid, tall oil fatty acid, or mixtures thereof. Preferably the unsaturated fatty acid is selected from linolenic, linoleic and oleic acids, soy bean fatty acid, tall oil fatty acid and mixtures thereof.

Preferably a mixture of fatty acids will be present in the alkyd resin. Typically, the fatty acid is derived from natural or synthetic oils and thus the mixture of fatty acids present in the alkyd resin reflects the mixture present in the oil. Saturated fatty acids and oils may optionally be present. Examples of suitable oils for providing fatty acid groups in alkyd resin include linseed oil, soybean oil, rapeseed oil, sun flower oil, palm oil, tung oil, calendula oil, wood oil (e.g. pine oil), safflower oil, tuna fish oil, and combinations thereof. Preferably the oil is selected from rapeseed oil, linseed oil, sunflower oil and soybean oil.

Alkyd resins are often characterised by their oil length. The alkyd resin present in the compositions of the present invention preferably has an oil length of 30-85 wt%, more preferably 40 to 85 wt% and still more preferably 55-85 wt%. Alkyds comprising at least 55 wt% fatty acids are generally referred to as long oil alkyds whilst alkyds comprising less than 40 wt% fatty acids are generally referred to as short oil alkyds. Alkyds with 40-55 wt% fatty acids are generally referred to as medium oil alkyds. Preferred alkyd resins present in the compositions of the present invention are medium oil alkyd resins and/or long oil alkyd resins and particularly long oil alkyd resins.

The degree of modification by fatty acids plays an important role in determining the properties of the alkyd resin. By modifying the alkyd resin with unsaturated fatty acids, the resin becomes auto-oxidative curing which is a key stage in the drying process. The auto-oxidative curing of the composition preferably takes place at 0 to 40°C, preferably from 5 to 30°C and most preferably from 10 to 25°C.

Unsaturated groups in the oxidative drying alkyd resin may additionally be introduced by one or more of the polyols, carboxylic acids or anhydrides or other monomers used in the synthesis of the alkyd resin. Alternatively or additionally, other crosslinking mechanisms may be introduced into the alkyd resin to supplement auto-oxidative cross linking to give dual (or multiple) curing. Secondary curing mechanisms may result from, e.g. incorporating additional functional groups, e.g. vinyl or carbonyl, into the resin that may provide further crosslinking, resulting in an even faster drying process of the coating composition.

Other functional groups that facilitate cross linking may be introduced into the alkyd resin by techniques well known in the art. For instance, they may be introduced by: i) employing monomers carrying the functional group in the polymerization process used to form the alkyd resin; or ii) employing monomers bearing selected reactive groups that may be subsequently reacted with a compound carrying the desired functional group or which will react with another group in the alkyd resin via covalent bonding. However, the selection of the latter groups should ensure that the most significant part of any crosslinking reaction(s) only takes place after application of the resin to a substrate. This will avoid an "in-can" build-up of the molecular weight of the resins which may be problematic where the viscosity of the resin composition either becomes too high for application or becomes too high for effective leveling of the composition upon its application to a substrate or in the early stages of drying.

Optionally, the alkyd resin may comprise other repeat units and/or units. An example of another unit that may be included in the alkyd resin is derived from monocarboxylic acids. Monocarboxylic acids function as chain stoppers. In preferred compositions of the invention the alkyd resin derives from at least one monocarboxylic acid of formula (III):

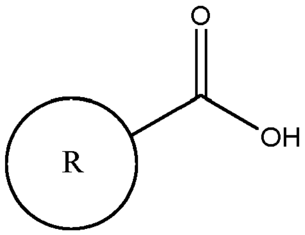

(III)

wherein

R is an organic group. Preferably R is an organic group selected from $C_{5-12}$ aryl, $C_{5-10}$ cycloalkyl and $C_{1-30}$ alkyl.

Examples of suitable monocarboxylic acids include acetic acid, propionic acid, pivalic acid, 2-ethylhexanoic acid, lauric acid, palmitic acid, stearic acid, 4-tert-butyl-benzoic acid, cyclopentane carboxylic acid, naphthenic acid, cyclohexane carboxylic acid, 2,4-dimethyl benzoic acid, 2-methyl benzoic acid, benzoic acid, 2,2-dimethylol propionic acid, dimethylolpropionic acid, tetrahydrobenzoic acid, hydrogenated or non-hydrogenated abietic acid or its isomer and mixtures thereof. Preferred monocarboxylic acids include acetic acid, propionic acid, dimethylolpropionic acid, benzoic acid, tetrahydrobenzoic acid and 4-tert-butyl-benzoic acid. Optionally mixtures of two or more of such monocarboxylic acids may be employed.

Another type of unit that may be incorporated during synthesis of the alkyd resin is derived from hydroxyfunctional carboxylic acids. Representative examples of such acids include dimethylolpropionic acid, dimethylolbutyric acid, trihydroxymethylacetic acid, dihydroxymethylvaleric acid, dihydroxypropionic acid, heptonic acid, citric acid, tartaric acid, dihydroxymalonic acid, gluconic acid, hydroxybenzoic acid, dihydroxybenzoic acid, hydroxyvaleric acid, hydroxypropionic acid and/or hydroxypivalic acid and/or lactones and other inner ether, such as glycolide, valerolactone, propiolactone, caprolactone and/or polycaprolactone.

Another type of unit that may be incorporated during synthesis of the alkyd resin is derived from isocyanates. Suitable isocyanates include methyl isocyanate, toluene diisocyanate, diphenyl methane diisocyanate, hexamethylene diisocyanate, 1,6-hexane diisocyanate, dicyclo-hexylmethane diisocyanate, isophorone diisocyanate, tetramethylxylene diisocyanate, dicyclohexyl methane diisocyanate, furan diisocyanate, tetrahydrofuran diisocyanate, cyclohexylene diisocyanate, xylene diisocyanate, naphthalene diisocyanate, phenylene diisocyanate, nonane triisocyanate and/or triphenyl methane triisocyanate. Further suitable isocyanate based components include isocyanurates, biurets and allophanates.

Another type of unit that may be incorporated during synthesis of the alkyd resin is that comprising epoxy groups. Representative examples of suitable compounds include 1,2-epoxy-3-allyloxypropane, 1-allyloxy-2,3-epoxypropane, 1,2-epoxy-3-phenoxypropane, 1-glycidyloxy-2-ethylhexane, bisphenol A-diglycidyl ether or a reaction product thereof, diglycidyl ether of pentaerythritol spiroglycol (glycidyl ether of 2,4,8, 10-tetraoxaspiro[5.5]undecane-3,9-diethanol), diglycidyl terephthalate, epoxidised soybean fatty acid, epoxidised soybean oil, epoxidised polyvinyl alcohol, epoxidised dehydrated castor oil, epoxidised linseed oil and 3,4-epoxy- - cyclohexylmethyl-3,4-epoxycyclohexane-carboxylate.

The alkyd resin may optionally be modified by compounds such as thiols, polythiols, thio acids, polythio acids, amines, polyamines, vinylics, such as styrene and vinyltoluene, silicones, oxetanes and/or hydroxyoxetanes, such as oxetanes of 2-alkyl-1,3-propanediols, 2,2-dialkyl-1,3-propanediols, 2-alkyl-2-hydroxyalkyl-1,3-propanediols, 2,2-dihydroxyalkyl-1,3-propanediols as well as dimers and polymers thereof.

Alkyd resins that are suitable for incorporation into the compositions of the present invention are commercially available. Alternatively, the alkyd resin may be obtained using conventional synthesis techniques that are well known in the art. General processes for the preparation of alkyd polyesters are described in "Alkyd Resin Technology" by T. C. Patton, Publisher John Wiley & Sons Inc. (1962), the disclosure of which is incorporated herein by reference.

The alkyd resin preferably has a Mn of 1,000-6,000, more preferably 1,200-5,000 and still more preferably 1,500-3,500. The alkyd resin preferably has a Mw of 3,000-300,000, more preferably 4,000-70,000 and still more preferably 4,000-25,000. The polydispersity index (PDI) of the alkyd resin is preferably 1.0-15.0, more preferably 1.5-10.0 and still more preferably 2.0-8.0.

The alkyd resin preferably has a final polymer acid value of 1 to 40 mg KOH/g, more preferably 1 to 20 mg KOH/g and still more preferably 3 to 16 mg KOH/g. Acid value is determined in accordance with ISO 2114.

Preferred compositions of the present invention comprise 5-50 wt%, more preferably 5-35 wt% and still more preferably 10-30 wt% of alkyd resin, based on the total weight of the composition.

Drier

The time for the coating composition of the invention to dry depends on the concentration and types of unsaturated fatty acids present in the alkyd resin. Preferably the auto-oxidation and crosslinking reaction is accelerated by the presence of a metal-based drying catalyst, commonly referred to as a "drier". The metal within the drying catalyst catalyzes autoxidation by forming a complex with both atmospheric oxygen and the double bonds of the unsaturated fatty acid groups within the composition.

Examples of known driers include compounds, polymers and polyvalent salts containing cobalt, calcium, vanadium, copper, zinc, iron, zirconium, manganese, barium, zinc and strontium. When the drier is in salt form, the aforementioned metals preferably form the cation and halides, nitrates, sulphates, carboxylates, such as acetates, ethylhexanoates, octanoates and naphthenates, or acetoacetonates form the anion. Other known driers include ethylhexanoate and neodecanoate. Any conventional drier may be present in the compositions of the invention.

Preferred compositions of the present invention comprise 0.05-0.5 wt%, more preferably 0.1-0.4 wt% and still more preferably 0.1-0.3 wt% of drier, based on the solid content of drier present in the total weight of the composition.

Clay

The clay present in the composition of the present invention may be a kaolin clay, a smectite clay, an illite clay or a chlorite clay. Preferably, however, the clay present in the composition of the invention is a smectite clay and particularly preferably an organically modified smectite clay or a synthetic smectite clay. Still more preferably the clay present in the compositon of the invention is a synthetic smectite clay.

Clays, also known as phyllosilicates, are characterized by the presence of layered structures composed of polymeric sheets containing $SiO_4$ tetrahedra linked with metal-containing octahedral sheets. More specifically, a phyllosilicate structure consists of layers in which planes of oxygen atoms coordinate to cations (such as Si, Al, Mg and Fe) to form two-dimensional sheets. The coordination of cations in sheets adjacent to one another typically alternates between the tetrahedral and octahedral form.

Tetrahedral sheets commonly containing $Si^{4+}$, $Al^{3+}$ and $Fe^{3+}$ consist of hexagonal or ditrigonal rings of oxygen tetrahedra linked by shared basal oxygen atoms. The apical oxygen atoms in these tetrahedra aid in forming the base of octahedral sheets commonly containing $Mg^{2+}$, $Al^{3+}$, $Li^{+}$, $Fe^{+}$ and $Fe^{3+}$. The repetition of sheets (i.e., in the tetrahedral-octahedral-tetrahedral form or tetrahedral-octahedral form) is commonly referred to as a clay layer. The tetrahedral-octahedral-tetrahedral and tetrahedral-octahedral layers are respectively termed 2:1 and 1:1 structures respectively. Preferably the clay present in the composition of the invention is a 2:1 clay, i.e. a clay that is comprised of an octahedral sheet sandwiched between two tetrahedral sheets.

The smectite group of clays includes montmorillonite, beidellite, nontronite, saponite, hectorite and bentonite. These groups are differentiated by variations in chemical composition involving substitutions of Al for Si in tetrahedral cation sites and Al, Fe, Mg and Li in octahedral cation sites. Smectite clays have a variable net negative charge, which is balanced by Na, Ca, Mg and, or, H adsorbed externally on interlamellar surfaces. In preferred compositions of the invention the clay is a montmorillonite, hectorite or a bentonite.

Montmorillonite is characterized by having a greater than 50% octahedral charge. Its cation exchange capacity is due to isomorphous substitution of Mg for Al in the central alumina plane. The substitution of lower valence cations in such instances leaves the nearby oxygen atoms with a net negative charge that can attract cations. Naturally occurring montmorillonite is hydrated sodium calcium aluminium magnesium silicate hydroxide $(Na,Ca)_{0.33}(Al,Mg)_2(Si_4O_{10})(OH)_2 \cdot nH_2O$. Potassium, iron, and other cations are common substitutes. The water content is variable.

Hectorite has the empirical formula $Na_{0.33}(Mg,Li)_3(Si_4O_{10})(OH)_2$.

In bentonite, each platelet consists of three sandwich-arranged layers: a central octahedral alumina ($Al_2O_3$) layer, and two tetrahedral silica ($SiO_2$) layers. The silicon ion and the aluminium ion often undergo isomorphous substitutions by lower valence metals, such as magnesium and iron. In turn, these substitutions lead to a charge imbalance, compensated by exchangeable cations, in particular calcium ($Ca^{2+}$), magnesium ($Mg^{2+}$) and sodium ($Na^{+}$) ions, together with water molecules bonded together by ion-dipole forces. These ions, with no more space inside the reticular structure, migrate to the external silica layers and are the main cause of hydration in the crystal lattice. Therefore, each platelet has the following general formula: $[(Si\ Al)_4\ (Al^{Fe.Mg})_2O_{10}(OH)_2]_2 \cdot M_n \cdot mH_2O$ where $(SiAl)_4$ refers to isomorphic constitutions in the tetrahedral layers, $(Al^{Fe.Mg})_2$ refers to isomorphic constitutions in the octahedral layer; and M and $mH_2O$ refer to exchangeable cations and interposition water, respectively.

The clay present in the preferred compositions of the present invention may be a natural clay, organically modified clay or a synthetic clay but is preferably a synthetic clay. Preferably the clay is in the form of plates or discs having a mean diameter of 15 to 206,000 nm, more preferably 20 to 49,600 nm and still more preferably 20 to 250 nm. Particle size may be measured by any conventional technique known in the art, e.g. light scattering. An advantage of using synthetic clay is that the plates or discs have a much smaller average particle size (e.g. less than 20% of the size) than natural clay as well as a much more consistent particle size than natural clays.

Without wising to be bound by theory it is thought that the clay present in the composition of the present invention

reduces the tackiness or stickiness during film drying by forming a layer, possibly a monolayer, on top of the film. By forming such a layer, it is believed that the clay particles may reduce the stickiness or tackiness of the forming film. The clay particles may also contribute to the improved aesthetic effect achieved with the films of the present invention.

In more preferred compositions of the invention the clay is a laponite or bentone, e.g. organically modified bentone.

Laponites are sodium, magnesium mixed silicates also possibly containing lithium. Preferably, the laponite used is a sodium, lithium and magnesium silicate, more preferably laponite of the general formula $(Na)_{0.33}(Mg\text{-}Li)_3(Si_4O_{10})(OH)_2 \cdot nH_2O$ or $Na^+_{0.7}[(Si_8Mg_{5.5}Li_{0.3})O_{20}(OH)_4]^{-0.7}$ and particularly preferably $Na^+_{0.7}[(Si_8Mg_{5.5}Li_{0.3})O_{20}(OH)_4]^{-0.7}$. Particularly preferred laponites include products sold by the company BYK under the name Laponite XLS, Laponite XLG, Laponite EP, Laponite RD and Laponite RDS. Another preferred organically modified clay is Bentone LT. It is commercially available from Elementis.

Particularly preferred clays are selected from Laponite EP, Laponite RD, Laponite RDS and Bentone LT.

Preferred compositions of the present invention comprise 0.75-5.0 wt%, more preferably 0.8-4.5 wt% and still more preferably 0.9-3.0 wt% of clay, based on the total weight of the composition.

Water

The compositions of the present invention are waterborne. The water used to form the composition is deionised water, or soft or pure tap water. Preferably the water has a hardness of less than 5 dH°.

Preferred compositions of the invention comprise at least 50 wt% water, based on the total weight of the solvent present in the coating composition. More preferred compositions comprise 50 to 90 wt% water, still more preferably 55-80 wt% water and yet more preferably 55 to 75 wt% water, based on the total weight of solvent present in the coating composition.

Preferred compositions of the invention comprise at least 40 wt% water, based on the total weight of the coating composition. More preferred compositions comprise 40 to 90 wt% water, still more preferably 42-80 wt% water and yet more preferably 45 to 75 wt% water, based on the total weight of the coating composition.

Optionally surfactants may be utilised to assist in the dispersion of the alkyd resin in the water. Suitable surfactants include conventional anionic, cationic and ionic surfactants and mixtures thereof. Preferably the alkyd emulsion is subsequently mixed with the other components of the composition to form the coating composition.

Thickener

The compositions of the present invention optionally comprise one or more thickeners. When the coating composition is for application to a horizontal surface such as a floor, the composition preferably does not comprise any non-clay thickener. When the coating composition is for application to an overhead or non-horizontal surface (e.g. a ceiling or wall), the composition preferably comprises a thickener different to the clay present in the composition. The thickener different to clay advantageously reduces the spatter and/or sag which occurs during application of the coating composition.

The thickener present in the coating compositions of the invention is preferably a polysaccharide and/or an associative thickener. Cellulosic thickeners (e.g. hydroxyethyl cellulose) may also be used. Particularly preferred compositions of the invention comprise at least one polysaccharide thickener and at least one associative thickener.

Exemplay polysaccharide thickeners for use in the coating compositions include alginin, guar gum, locust bean gum and xanthan gum.

Exemplary associative thickeners for use in the coating compositions include non-ionic synthetic associative thickener (niSAT), hydrophobically modified ethoxylated urethanes (HEUR), hydrophobically modified alkali-swellable emulsions (HASE), and styrene-maleic anhydride terpolymers (SMAT). Acidic acrylate copolymers (cross-linked) of ethyl acrylate and methacrylic acid, and acrylic terpolymers (cross-linked) of ethyl acrylate, methacrylic acid, and nonionic urethane surfactant monomer may also be used as associative thickeners. When one or more suitable associative thickeners are used, the thickening reaction is caused in part by either association between the associative thickener and at least one other particle of the coating composition (e.g., a pigment particle or polymer particle) or another associative thickener molecule.

Preferred compositions of the invention comprise 0 to 3 wt% thickener (excluding clay), still more preferably 0-1 wt% thickener (excluding clay) and yet more preferably 0 to 0.6 wt% thickener (excluding clay), based on the total weight of the composition. Preferred compositions of the invention comprise 0 to 0.4 wt% polysaccharide thickener, still more preferably 0-2 wt% polysaccharide thickener and yet more preferably 0 to 0.08 wt% polysaccharide thickener, based on the total weight of the composition. Preferred compositions of the invention comprise 0 to 3 wt% associative thickener, still more preferably 0-1 wt% associative thickener and yet more preferably 0 to 0.5 wt% associative thickener, based on the total weight of the composition.

Biocide

The coating composition of the present invention preferably comprises a biocide. The terms biocides, antimicrobial agent, biologically active compounds and toxicant are used in the industry to describe known compounds that act to prevent biological growth, e.g. growth of mold, algae and the like. The biocide may be inorganic, organometallic or organic. Preferred biocides present in the compositions of the invention are organic agents. Suitable biocides are commercially available.

The coating compositions of the present invention may comprise in can biocide (PT 6), dry film biocide (PT 7) and/or wood preservatives (PT 8). Mixtures of different biocides may also be employed. Representative examples of suitable biocides that may be present in the coating compositions of the present invention include:

Isothiazolines: Reaction mass of 5-chloro-2-methyl-4-isothiazolin-3-one and 2-methyl-2H-isothiazol-3-one (3:1) (CIT/MIT) (PT6, 0.0001-0.01% (1-100 ppm)); 5-chloro-2-methyl-4-isothiazolin-3-one (CIT) (PT6, 0.0001-0.01% (1-100 ppm)); 2-Methyl-4-isotiazolin-3-one (MIT)(PT6, 0.0001-0.05 (1-500 ppm)); 2-Methyl-1,2-Benzisothiazol-3(2H)-one (MBIT)(PT6, 0.0001-0.05 (1-500 ppm)); 1,2-Benzisothiazolin-3-one (BIT)(PT6, 0.0001-0.05 (1-500 ppm)); 4,5-Dichlor-2-n-octyl-4-isotiazolin-3-one (DCOIT)(PT7/8, 0.01-0.5% (100-5000 ppm); 2-Octyl-2H-isothiazol-3-one (OIT)(PT6/7/8, 0.0001-0.5% (1-5000 ppm)); 2-butyl-benzo[d]isothiazol-3-one (BBIT)(PT6/7, 0.0001-0.5% (1-5000 ppm)); 2-thiazol-4-yl-1 H-benzoimidazole (Thiabendazole)(PT7/8, 0.01-0.5% (100-5000 ppm));

Azoles: Methyl (E)-2-{2-[6-(2-cyanophenoxy)pyrimidin-4-yloxy]phenyl}-3-methoxyacrylate (Azoxystrobin)(PT7, 0.01-0.5% (100-5000 ppm)); 1-[[2-(2,4-dichlorophenyl)-4-propyl-1,3-dioxolan-2-yl]methyl]-1H-1,2,4-triazole (Propiconazole)(PT7/8, 0.01-0.5% (100-5000 ppm)); 1-(4-chlorophenyl)-4,4-dimethyl-3-(1,2,4-triazol-1-ylmethyl)pentan-3-ol (Tebuconazole)(PT7/8, 0.01-0.5% (100-5000 ppm));Amides/Ureas: Benzamide, 2,2'-dithiobis (DTBMA)(PT6, 0.0001-0.05% (1-500 ppm)), 2,2-dibromo-2-cyanoacetamide (DBNPA)(PT6, 0.0001-0.05% (1-500 ppm)); 3-(3,4-dichlorophenyl)-1,1-dimethylurea (Diuron)(PT7, 0.01-0.5% (100-5000 ppm)); 3-(4-Isopropylphenyl)-1,1-dimethylurea (Isoproturon)(PT7, 0.01-0.5% (100-5000 ppm))

Pyrithiones: Zinc pyrithione (ZnPT)(PT6/7, 0.0001-0.05% (1-500 ppm)); Sodium pyrithione (NaPT)(PT6/7, 0.0001-0.05% (1-500 ppm));

Organohalogens: 2-Bromo-2-nitro-1,3-propanediol (Bronopol)(PT6, 0.001-0.05% (1-500 ppm); 4-(2,2-difluoro-1,3-benzodioxol-4-yl)-1H-pyrrole-3-carbonitrile (Fludioxonil)(PT7, 0.01-0.5% (100-5000 ppm)); Dichloro-N-[(dimethylamino)sulphonyl] fluoro-N-(ptolyl)methanesulphenamide (Tolylfluanid)(PT7/8, 0.01-0.5% (100-5000 ppm));

Carbamates: 3-iodo-2-propynylbutylcarbamate (IPBC)(PT6/7/8, 0.01-0.5% (100-5000 ppm)); Methyl 2-benzimidazoie carbamate (Carbendazim)(PT7, 0.01-0.5% (100-5000 ppm))

Silver chemistry: Reaction mass of titanium dioxide and silver chloride (PT6/7, 0.0001-0.5% (1-5000 ppm)); Silver copper zeolite (PT7, 0.0001-0.5% (1-5000 ppm)); Silver nitrate (PT7, 0.0001-0.5% (1-5000 ppm)); Silver phosphate glass (PT7, 0.0001-0.5% (1-5000 ppm)); Silver sodium hydrogen zirconium phosphate (PT7, 0.0001-0.5% (1-5000 ppm)); Silver zeolite (PT7, 0.0001-0.5% (1-5000 ppm)); Silver zinc zeolite (PT7, 0.0001-0.5% (1-5000 ppm));

Triazines: (4E)-4-(Ethylimino)-N-(2-methyl-2-propanyl)-6-(methylsulfanyl)-1,4-dihydro-1,3,5-triazin-2-amine (Terbutryn)(PT7, 0.01-0.5% (100-5000 ppm));

Formaldehyde donor/$CH_2O$ adducts: N,N-Methylenebismorpholine (MBM)(PT6, 0.0001-0.5% (1-5000 ppm)); (ethylenedioxy)dimethanol (EDDM) (PT6, 0.0001-0.5% (1-5000 ppm)); $\alpha$, $\alpha'$, $\alpha''$-trimethyl-1,3,5-triazine-1,3,5(2H,4H,6H)-triethanol (HPT); 3,3'-methylenebis[5-methyloxazolidine] (Oxazolidin/MBO) (PT6, 0.0001-0.5% (1-5000 ppm)); Sodium N-(hydroxymethyl)glycinate; Tetrahydro-1,3,4,6-tetrakis(hydroxymethyl)imidazo[4,5-d]imidazole-2,5(1H,3H)-dione (TMAD)(PT6, 0.0001-0.5% (1-5000 ppm)); Tetrakis(hydroxymethyl)phosphonium sulphate(2:1) (THPS) (PT6, 0.0001-0.5% (1-5000 ppm)); Methenamine 3-chloroallylochloride (CTAC)(PT6, 0.0001-0.5% (1-5000 ppm)); 2,2',2"-(hexahydro-1,3,5-triazine-1,3,5-triyl)triethanol (HHT)(PT6, 0.0001-0.5% (1-5000 ppm)); 1,3-bis(hydroxymethyl)-5,5-dimethylimidazolidine-2,4-dione (DMDMH)(PT6, 0.0001-0.5% (1-5000 ppm)); 7a-ethyldihydro-1H,3H,5H-oxazolo[3,4-c]oxazole (EDHO)(PT6, 0.0001-0.5% (1-5000 ppm)); cis-1-(3-chloroallyl)-3,5,7-triaza-1-azoniaadamantanechloride (cis CTAC)(PT6, 0.0001-0.5% (1-5000 ppm)); (benzyloxy)methanol(PT6, 0.0001-0.5% (1-5000 ppm)).

Preferably the total amount of biocide present in the compositions of the invention is 0.0001-0.6 wt%, more preferably 0.03-0.5 wt% and still more preferably 0.04-0.4 wt%, based on the total weight of the composition.

Pigment

The coating composition of the present invention preferably comprises one or more pigments. The pigments may be inorganic pigments, organic pigments or a mixture thereof. Examples of inorganic pigments include titanium dioxide, iron oxides, zinc oxide, zinc sulfide, barium sulfate, chromium oxide green or cadmium pigments. Examples of

organic pigments are naphthol red, phthalocyanine compounds (e.g. phthalocyanine green, phthalonitrile blue), ultramarine blue azo pigments and carbon black.

When the compositions of the present invention comprise titanium dioxide, and produce white films, a further advantage of the compositions is realised. Specifically, it has been discovered that the presence of the clay in the composition reduces the tendency of the alkyd resin to produce a yellow hue in the film.

During preparation of the coating composition of the present invention the pigment may be ground and mixed with the other components present therein. This method provides coating compositions having a ready-made colour. Alternatively, the pigment may be added to the coating composition after all of the other components of the composition have been mixed together in a post-addition step. This process is often referred to as tinting.

Preferably the total amount of pigment present in the compositions of the invention is 0-25 wt%, more preferably 0-10 wt% and still more preferably 0.5-8 wt%, based on the total weight of the composition. The skilled man will appreciate that the pigment content will vary depending on the other components present and the end use of the coating composition.

Organic solvent

The coating composition of the present invention optionally comprises an organic solvent. The solvent present may derive from the production of alkyd, from other components present in the composition that are provided in solvents and/or from solvent added into the composition. The solvent is preferably volatile. Suitable solvents present in the compositions of the invention are commercially available.

Examples of suitable organic solvents and thinners are aromatic hydrocarbons such as xylene, toluene, mesitylene; ketones such as methyl ethyl ketone, methyl isobutyl ketone, methyl amyl ketone, methyl isoamyl ketone, cyclopentanone, cyclohexanone; esters such as butyl acetate, tert-butyl acetate, amyl acetate, isoamyl acetate, ethylene glycol methyl ether acetate, propylene glycol methyl ether acetate; ethers such as ethylene glycol dimethyl ether, diethylene glycol dimethyl ether, dibutyl ether, dioxane, tetrahydrofuran; alcohols such as 1-propanol, 2-propanol, n-butanol, isobutanol, benzyl alcohol; ether alcohols such as butoxyethanol, 1-methoxy-2-propanol; ester alcohols such as 2,2,4-trimethyl-1,3-pentanediol monoisobutyrate (texanol), aliphatic hydrocarbons such as white spirit; and optionally a mixture of two or more solvents and thinners.

The amount of solvent present in the coating compositions of the present invention is preferably as low as possible as this minmizes the VOC content. Preferably solvent is present in the compositions of the invention in an amount of 0-13 wt%, more preferably 1-12 wt% and still more preferably 2-12 wt% based on the total weight of the composition. The skilled man will appreciate that the solvent content will vary depending on the other components present.

Preferred coating compositions of the present invention comprise:

(i) 5-50 wt%, more preferably 10-30 wt%, of at least one oxidative drying alkyd resin;
(ii) 0.75-5 wt%, more preferably 0.9-3.0 wt%, of at least one clay;
(iii) 50-90 wt%, more preferably 55-75 wt%, water;
(iv) 0.05-0.5 wt%, more preferably 0.1-0.3 wt%, of a drier;
(v) 0-3 wt%, more preferably 0-0.6 wt%, of thickener;
(vi) 0.0001-0.6 wt%, more preferably 0.04-0.4 wt%, of biocide;
(vii) 0-25 wt%, more preferably 0.5-8 wt%, of pigment; and
(viii) 0-13 wt%, more preferably 2-12 wt%, of organic solvent.

Additives

The coating composition of the present invention preferably comprises one or more other additives. Examples of other components that can be added to the coating composition are defoamers, anticorrosion agents, dispersing agents, wetting agents, UV absorbents, binders, reinforcing agents, thixotropic agents, fillers, anti-static agents, flame retardant agents, lubricants, anti-settling agents, and plasticizers. Preferably the composition does not comprise a latex polymer.

Preferably the total amount of additives present in the compositions of the invention is an amount of 0-5.0 wt%, more preferably 0.5-2.5 wt% and still more preferably 0.6-2.0 wt%, based on the total weight of the composition.

Compositions and Stain, Varnish, Lacquer and Glaze

The present invention also relates to a method of preparing the composition as hereinbefore described wherein the components present in the composition are mixed. Any conventional production method may be used.

The composition as described herein may be prepared in a suitable concentration for use, e.g. in brush or rolling application. In this case, the composition is itself a stain, varnish, lacquer or glaze. Alternatively, the composition

may be a concentrate for preparation of a stain, varnish, lacquer or glaze. In this case, further solvent, typically water, is added to the composition described herein to form the final stain, varnish, lacquer or glaze. After mixing, and optionally after addition of solvent, e.g. water, the coating composition or stain, varnish, lacquer or glaze is preferably filled into a container. Suitable containers include cans, drums and tanks.

The coating composition is preferably supplied as a one-pack. Thus the composition is preferably supplied in a ready-mixed or ready to use form. Optionally the one-pack product may be tinted with pigments prior to application.

Preferably the coating composition and stain, varnish, lacquer or glaze of the invention has a Brookfield viscosity (cP) of 250-15,000 cP, more preferably 1000-14,500 cP, and still more preferably 2,400-14,000 cP. Preferably Brookfield viscosity is measured as described in the examples.

Preferably the coating composition and stain, varnish, lacquer or glaze of the invention has a Krebs Stormer viscosity of 50-95 KU, more preferably 55-80 KU, and still more preferably 60-75 KU. Preferably Krebs Stormer viscosity is measured as described in the examples.

Preferably the coating composition and stain, varnish, lacquer or glaze of the invention has a tackiness of 0-2.5 and more preferably 0-2. Preferably tackiness is measured as described in the examples.

Preferably the coating composition and stain, varnish, lacquer or glaze of the invention has a content of volatile organic compounds (VOC) of 0 to 130 g/L, preferably 1 to 12 g/L, e.g. 2 to 11.5 g/L. VOC content can be calculated (ASTM D5201-01) or measured (EPA, method 24 from ASTM D 2369 if reactive diluents are present, ISO 11890-1 if solvent content > 15 wt%, and ISO 11890-2 if solvent content < 15 wt%).

When the coating composition or stain, varnish, lacquer or glaze of the invention is designed to be white, preferably it has a Whiteness (L) of 50-100, more preferably 80-100 and still more preferably 93-99.

When the coating composition or stain, varnish, lacquer or glaze of the invention is designed to be white, preferably it has a Yellowness (b) of 0-10, more preferably 0-9 and still more preferably 0-7. Preferably whiteness and yellowness are measured as described in the examples.

The coating composition and stain, varnish, lacquer or glaze of the invention can be applied to a whole or part of any article or surface. The coating compositon of the invention advantageously improves the appearance of the surface. The coating composition highlights the natural surface, e.g. wood, and gives a natural appearance, e.g. without any yellowing often associated with alkyd resins. Another advantage of the coating composition of the present invention is that the coating preferably protects surfaces subject to degradation, e.g. by UV, water and/or biological agents such as mold or algae.

Application of the coating composition and stain, varnish, lacquer or glaze can be accomplished by any convenient means, e.g. via painting with a brush or roller, onto the article. The coating composition, once dried, forms a film. The film of the present invention therefore comprises the composition as hereinbefore described but with little, or no, water content or solvent. Alternatively defined, the film of the present invention is derived from or obtained from the composition as hereinbefore defined by drying and/or curing. The film formed, especially when the film is on wood, preferably has a thickness of 0-90 $\mu$m, more preferably 0-50 $\mu$m and still more preferably 0-25 $\mu$m.

Suitable substrates that may be coated with the coating composition herein described include wood, wooden based materials, e.g. MDF, chipboard, metal, stone, plastic, natural and synthetic fibres, glass, ceramics, plaster, concrete, leather, paper, foam or masonry. Preferably the substrate is wood or wooden based material.

Representative examples of articles that may be coated with the coating composition described herein include both interior and exterior articles such as decking, fencing, wall and ceiling surfaces, house structures (e.g. door frames, window frames, exposed beams etc.), furniture (interior and exterior) and sheds.

The invention will now be described by the following non-limiting examples wherein:

EXAMPLES

**Materials**

• Characterisation of Alkyd Resins

Water borne alkyd emulsions were purchased commercially or prepared according to conventional methodology as described in "Alkyd Resin Technology" by T. C. Patton, Publisher John Wiley & Sons Inc. (1962). The characteristics of the alkyd emulsions employed are summarised in the table below. All alkyd emulsions employed had a solids content of 55 wt%.

| Sample | Oil/fatty acid | Oil length | Mn | Mw | Mw/Mn |
|---|---|---|---|---|---|
| Alkyd 1 | | ~70 | | | |

(continued)

| Sample | Oil/fatty acid | Oil length | Mn | Mw | Mw/Mn |
|---|---|---|---|---|---|
| Alkyd 2 | Soybean fatty acid | ~70 | 2130 | 4510 | 2.1 |
| Alkyd 3 | Tall oil fatty acid | ~77 | 2280 | 7890 | 3.5 |
| Alkyd 4 | Tall oil fatty acid | ~62 | 3160 | 17530 | 5.5 |
| Alkyd 5 | Soybean oil -refined | ~56 | 1830 | 5100 | 2.8 |
| Alkyd 6 | Linseed oil, soybean oil and tall oil fatty acid | ~84 | 2470 | 15550 | 6.3 |

The molecular weight of the alkyd resin present in the emulsion was determined by Gel Permeation Chromatography (GPC) measurement. The molecular weight distribution (MWD) was determined using a Malvern Omnisec Resolve and Reveal system with two PLgel 5 μm Mixed-C columns from Agilent in series. The columns were calibrated by conventional calibration using narrow polystyrene standards. The analysis conditions were as set out in the table below.

| | |
|---|---|
| Detector | RI, LS Viscometer |
| Column Set | Agilent PLgel 5 μm Mixed-C, 2 columns in series |
| Mobile Phase | THF |
| Flow rate | 1 ml/min |
| Injection volume | 100 μl |
| Autosampler Temperature | 25 °C |
| Column Oven Temperature | 35 °C |
| Detector Oven Temperature | 35 °C |
| Data Processing | Omnisec 5.1 |
| Calibration standards | Polystyrene Medium EasiVials (4 ml) Red, Yellow and Green (conventional), Malvern Polystyrene 105K (narrow) and Polystyrene 245K (broad)(absolute MW) |

Samples were prepared by dissolving an amount of polymer solution corresponding to 25 mg dry polymer in 5 mL THF. The samples were kept for a minimum of 24 hours at room temperature prior to sampling for the GPC measurements. Before analysis the samples were filtered through 0.45 μm PTFE filters. The weight-average molecular weight (Mw) and the polydispersity index (PDI), given as Mw/Mn, are reported.

• Characterisation of Clays

Clays were purchased commercially. All clays were provided as 100 % solid (powder) form. The following clays were employed:

Laponite EP (gel forming)
Laponite RD (gel forming)
Laponite RDS (temporary sol forming)
Bentone LT

• Other components of the composition

The other compounds employed in the compositions exemplified herein were purchased commercially. They are summarised below:

Drier
Polysaccharide thickener
Associative thickener
Defoamer

Pigment
Biocide
Anticorrosion agent
Dispersing agent
Co-solvent
UV absorbent

A number of these compounds (e.g. biocide, anticorrosion agent, dispersing agent, UV absorbent and thickener) are often supplied in the form of solutions. This is taken into account in the calculation of the wt% and vol% of the compositions made from them as described below. In the examples the wt% and vol% refers to the ingredient as supplied.

| Raw material | Solid content (wt%) | density as supplied (g/l) | density solid (g/l) |
|---|---|---|---|
| Alkyd emulsion | 55 | 1001 | 1000 |
| Laponite EP | 100 | 2100 | 2100 |
| Laponite RD | 100 | 1000 | 1000 |
| Laponite RDS | 100 | 2530 | 2530 |
| Bentone LT | 100 | 2500 | 2500 |
| Polysaccharide thickener | 100 | 1500 | 1500 |
| Associative thickener 1 | 47 | 1050 | 1411 |
| Associative thickener 2 | 25 | 1050 | 1238 |
| Defoamer 1 | 100 | 1000 | 1000 |
| Defoamer 2 | 100 | 930 | 930 |
| $TiO_2$ | 100 | 4050 | 4050 |
| Yellow pigment | 38 | 1410 | 4259 |
| Biocide 1 | 15 | 1060 | 1606 |
| Biocide 2 | 9 | 1050 | 2274 |
| Biocide 3 | 53 | 1260 | 1703 |
| Biocide 4 | 50 | 1080 | 1174 |
| Anticorrosion agent | 40 | 1320 | 2538 |
| Drier 1 | 66 | 1090 | 1280 |
| Drier 2 | 1 | 1040 | 1684 |
| Dispering agent | 75 | 1070 | 1118 |
| Cosolvent 1 | 0 | 1030 | 0 |
| Cosolvent 2 | 0 | 950 | 0 |
| UV absorbent 1 | 100 | 970 | 970 |
| UV absorbent 2 | 95 | 1070 | 1076 |

**Preparation and Determination Methods**

• General procedure for the preparation of coating composition

The components of the coating composition were mixed in the proportions (parts by weight) given in the tables below. Comparative compositions lacking clay were also prepared and tested. The composition of these comparative compositions is also set out in the tables.

First the thickener was allowed to swell in water (15-30 min). Optionally the pigment was added, and grinded for about 20 minutes. The other raw materials were then added stepwise, under constant stirring to produce a ready-made colour composition. The stirring speed varies with demand, during the process. The test formulations were made in a 1 L can. For the 1 L can, a 65 mm stirrer was used.

If the pigment was not added during the above-described process, the pigment may be post- added using a conventional Jotun multi-colour machine. The multi-colour machine contains pastes with e.g. black, yellow, red, white pigments, which a software adds to the coating composition base to achieve desired colour. This process is referred to as tinting.

The stage at which the pigment is added does not impact on the coating composition obtained. In the present examples, tinting was generally used.

• Determination of viscosity

Low shear viscosity of the coating compositions was measured in accordance with ASTM D 2196 standard, using a Brookfield RVT230 instrument, spindle 2 and spindle 4, both at 5 rpm. The coatings were tempered to 23.0°C ± 0.5°C before the measurements.

The Krebs Stormer viscosity (KU) of the coating compositions was determined with a Sheen 480 Krebs viscometer according to ASTM D 562-10 (2014); method B. Deviation from the standard method: The standard size of the paint container used was 250 ml whereas the standard specifies a container size of 500 ml with an opening diameter of 85 mm. Kerbs' Unit is the load required to produce a rotational frequency of 200 r/min for an offset paddle rotor (spindle) immersed in paint.

Din cup 4 is a method for measuring viscosity on very fluid systems. A cup of standard size is filled with the coating. Then the seconds it takes for the coating to run through a hole in the bottom of the cup is measured. The method employed was in accordance with DIN 53211.

• Determination of PVC

The PVC of the coating compositions was calculated by following formula:

•

$$PVC \equiv \frac{Vp+Vf}{Vp+Vf+Vb} \cdot 100\%$$

Where Vp = total volume of all pigments in the system, Vf = total volume of all fillers in the system, and Vb = volume of the non-volatile part of the binders in the system.

• Calculation of vol% and wt% solids

The wt% solids in the coating compositions were calculated by assuming that all solvents will evaporate. It was also assumed that the surfactants will not evaporate. The wt% solids is then the weight percentage of the solid components, i.e. non-evaporating, relative to the weight of the total composition.

The vol% solids in the coating compositions were calculated using the density provided by the supplier and by assuming that all solvents will evaporate. Again, it was assumed that the surfactants will not evaporate. The vol% solids is then the volume percentage of the total components of the formulation that are solid, i.e. non-evaporating.

• Determination of gloss

Gloss hardness were measured on glass plates (NS-EN ISO 2813 standard). A 100 μm wet film of the composition was applied. Gloss was measured with a hand-held Tri-Gloss master 20-60-85° from Sheen. Gloss at 60° is reported herein.

• Determination of tackiness

The tackiness of films prepared using the coating compositions was measured as follows. 300 μm of wet stain was applied on a LENETA opacity sheet using a cylindrical automatic applicator. The speed was 60 mm/sec. The samples were dried at room temperature (22°C) overnight (12 hours) before tackiness was measured. LENETA sheets are commonly used as a film substrate in the coatings industry, when measuring colour/opacity. As they do not absorb any of the coating, the films are of even thickness, and it is easy to compare the different coating compositions. Thus, tackiness results are aslo reported from the LENETA draw downs. In contrast, wood substrates absorb coatings unevenly, depending on localised density and twig marks, and are thus less suitable for comparative measurements. The measurement is performed by touching the samples. Gloss was also measured. If the gloss instrument slightly sticks to the

film surface after gentle placement on the sample, the tackiness is rated as 3. Rating 4 is given if the gloss instrument sticks to the surface of the film to the extent that the LENETA sheet adheres to the instrument when the instrument is lifted. The gloss was measured according to the method described above.

| Rating | Description |
|---|---|
| 0 | hard, dry film |
| 1 | soft, dry film |
| 2 | slightly tacky |
| 3 | tacky: gloss instrument sticks slightly to the film |
| 4 | tacky: gloss instrument adheres to the film |
| 5 | very tacky or wet film |

• Determination of whiteness (L) and yellowness (b)

Both L and b was measured by placing a SP58 Sepctrophotometer X-Rite® at the dry film on the Leneta sheets, and measure. The same samples that were used to measure tackiness, was used to measure L and b. The instrument was calibrated towards white, and 0 reflectance prior to measurements.

Example 1: Effect of clay on tackiness and yellowness

The compositions described in the table below were prepared and analysed. The ingredients are given in parts by weight.

| Example | 1# | 2 | 3# | 4 | 5# | 6 |
|---|---|---|---|---|---|---|
| Alkyd emulsion 1 | 24.62 | 24.62 | | | | |
| Alkyd emulsion 2 | | | 24.62 | 24.62 | | |
| Alkyd emulsion 2 and 3, weight ratio 60:40 | | | | | 24.62 | 24.62 |
| Water | 61.77 | 59.92 | 61.77 | 59.92 | 61.77 | 59.92 |
| Laponite EP | 0.00 | 1.50 | 0.00 | 1.50 | 0.00 | 1.50 |
| Polysaccharide thickener | 0.24 | 0.08 | 0.24 | 0.08 | 0.24 | 0.08 |
| Defoamer | 0.12 | 0.12 | 0.12 | 0.12 | 0.12 | 0.12 |
| $TiO_2$ | 6.84 | 6.84 | 6.84 | 6.84 | 6.84 | 6.84 |
| Biocide 1 | 0.20 | 0.20 | 0.20 | 0.20 | 0.20 | 0.20 |
| Biocide 2 | 0.19 | 0.19 | 0.19 | 0.19 | 0.19 | 0.19 |
| Anticorrosion agent | 0.09 | 0.09 | 0.09 | 0.09 | 0.09 | 0.09 |
| Drier 1 | 0.18 | 0.18 | 0.18 | 0.18 | 0.18 | 0.18 |
| Drier 2 | 0.63 | 0.63 | 0.63 | 0.63 | 0.63 | 0.63 |
| Dispersing agent | 0.10 | 0.10 | 0.10 | 0.10 | 0.10 | 0.10 |
| Associative thickener 2 | 0.00 | 0.50 | 0.00 | 0.50 | 0.00 | 0.50 |
| Cosolvent 1 | 6.03 | 5.86 | 6.03 | 5.86 | 6.03 | 5.86 |
| Cosolvent 2 | 5.42 | 5.71 | 5.42 | 5.71 | 5.42 | 5.71 |
| UV Absorbent 2 | 0.41 | 0.38 | 0.41 | 0.38 | 0.41 | 0.38 |
| SUM | 106.8 4 | 106.9 2 | 106.8 4 | 106.9 2 | 106.8 4 | 106.9 2 |
| Din Cup 4 (seconds) | 34.0 | - | 34.0 | - | 34.5 | - |
| Brookfield RV Sp. 2.5 rpm (cP) [8000 = max] | | 8000 (max) | - | 7456 | - | - |
| Brookfield RV Sp. 4.5 rpm (cP) | - | - | - | 8280 | - | 10840 |

(continued)

| Example | 1# | 2 | 3# | 4 | 5# | 6 |
|---|---|---|---|---|---|---|
| Krebs Stormer (KU) | - | 66.0 | - | 69.6 | - | 70.8 |
| Pigment volume concentration (%) | 10.5 | 10.5 | 10.5 | 10.5 | 10.5 | 10.5 |
| vol% solids | 16.2 | 16.7 | 16.2 | 16.7 | 16.2 | 16.7 |
| wt% solids | 20.7 | 21.4 | 20.7 | 21.4 | 20.7 | 21.4 |
| Tackiness | 3 | 2 | 4 | 1 | 3 | 1 |
| Whiteness (L) | 93.2 | 93.4 | 94.3 | 95.5 | 94.9 | 95.4 |
| Yellowness (b) | 3.2 | 1.8 | 12.6 | 6.3 | 9.6 | 6.1 |
| Gloss 60° | 63.5 | 15.5 | 73.2 | 60.7 | 82.7 | 49.8 |
| # Examples 1, 3 and 5 are comparative examples | | | | | | |

The results show that the presence of Laponite EP, i.e. clay, reduced the tackiness of each of the alkyd resin binders tested. The presence of Laponite EP also decreased the tendency of the coatings to yellow. This can be observed from example 1, by comparing yellowness (b) of compositions with the same binder, with and without clay (1# vs. 2, 3# vs. 4, and 5# vs 6).

Example 2: Testing of different clays and different clay concentrations

The compositions described in the table below were prepared and analysed. The ingredients are given in parts by weight.

| | 7 | 8 | 9 | 10 | 11 | 12# | 13# | 14# |
|---|---|---|---|---|---|---|---|---|
| | Interior stain | Interior stain | Interior stain | Interior stain | Exterior stain | Interior stain | Interior stain | Exterior stain |
| Alkyd emulsion 4+5, weight ratio 30:70 (TS 55%) | 24.41 | 24.41 | 24.41 | 24.41 | 35.97 | 24.41 | 24.41 | 35.97 |
| Water | 59.92 | 59.92 | 59.92 | 59.92 | 56.01 | 59.92 | 59.92 | 56.01 |
| Laponite EP | 1.50 | 0.00 | 0.00 | 0.00 | 1.50 | 0.00 | 0.75 | 0.00 |
| Laponite RD | 0.00 | 1.50 | 0.00 | 0.00 | 0.00 | 0.00 | 0.00 | 0.00 |
| Laponite RDS | 0.00 | 0.00 | 1.50 | 0.00 | 0.00 | 0.00 | 0.00 | 0.00 |
| Bentone LT | 0.00 | 0.00 | 0.00 | 1.50 | 0.00 | 0.00 | 0.00 | 0.00 |
| Polysaccharide thickener | 0.08 | 0.08 | 0.08 | 0.08 | 0.00 | 0.24 | 0.08 | 0.00 |
| Associative thickener 1 | 0.00 | 0.00 | 0.00 | 0.00 | 0.00 | 0.00 | 0.00 | 1.70 |
| Defoamer 1 | 0.00 | 0.00 | 0.00 | 0.00 | 0.30 | 0.00 | 0.00 | 0.30 |
| Defoamer 2 | 0.12 | 0.12 | 0.12 | 0.12 | 0.30 | 0.12 | 0.12 | 0.30 |
| $TiO_2$ | 6.84 | 6.84 | 6.84 | 6.84 | 0.00 | 6.84 | 6.84 | 0.00 |
| Yellow pigment | 0.00 | 0.00 | 0.00 | 0.00 | 1.47 | 0.00 | 0.00 | 1.47 |
| Biocide 1 | 0.18 | 0.18 | 0.18 | 0.18 | 0.00 | 0.18 | 0.18 | 0.00 |
| Biocide 2 | 0.18 | 0.18 | 0.18 | 0.18 | 0.00 | 0.18 | 0.18 | 0.00 |
| Biocide 3 | 0.00 | 0.00 | 0.00 | 0.00 | 0.40 | 0.00 | 0.00 | 0.40 |

(continued)

| | 7 | 8 | 9 | 10 | 11 | 12# | 13# | 14# |
|---|---|---|---|---|---|---|---|---|
| | Interior stain | Interior stain | Interior stain | Interior stain | Exterior stain | Interior stain | Interior stain | Exterior stain |
| Biocide 4 | 0.00 | 0.00 | 0.00 | 0.00 | 0.40 | 0.00 | 0.00 | 0.40 |
| Anticorrosion agent | 0.06 | 0.06 | 0.06 | 0.06 | 0.00 | 0.06 | 0.06 | 0.00 |
| Drier 1 | 0.17 | 0.17 | 0.17 | 0.17 | 0.19 | 0.17 | 0.17 | 0.19 |
| Drier 2 | 0.61 | 0.61 | 0.61 | 0.61 | 0.98 | 0.61 | 0.61 | 0.98 |
| Dispersing agent | 0.10 | 0.10 | 0.10 | 0.10 | 0.00 | 0.10 | 0.10 | 0.00 |
| Associative thickener 2 | 0.50 | 0.50 | 0.50 | 0.50 | 0.00 | 0.50 | 0.50 | 0.00 |
| Cosolvent 1 | 5.86 | 5.86 | 5.86 | 5.86 | 0.75 | 5.86 | 5.86 | 0.75 |
| Cosolvent 2 | 5.71 | 5.71 | 5.71 | 5.71 | 0.99 | 5.71 | 5.71 | 0.99 |
| UV absorbent 1 | 0.00 | 0.00 | 0.00 | 0.00 | 0.92 | 0.00 | 0.00 | 0.92 |
| UV absorbent 2 | 0.38 | 0.38 | 0.38 | 0.38 | 0.00 | 0.38 | 0.38 | 0.00 |
| SUM | 106.60 | 106.60 | 106.60 | 106.6 | 100.18 | 105.28 | 105.87 | 100.38 |
| Brookfield RV Sp. 4, 5 rpm (cP) | 13800 | 4400 | 2400 | 14000 | 11200 | 1600 | 3200 | 1400 |
| Krebs Stormer (KU) | 73.2 | 53.1 | 56.9 | 93.2 | 70.7 | 56.4 | 58.4 | 54.1 |
| PVC | 10.5 | 10.5 | 10.5 | 10.5 | 0.5 | 10.5 | 10.5 | 0.5 |
| vol% solids | 16.7 | 16.7 | 16.7 | 16.7 | 22.3 | 16.7 | 16.7 | 22.3 |
| wt% solids | 21.4 | 21.4 | 21.4 | 21.4 | 22.1 | 21.4 | 21.4 | 22.1 |
| Tackiness after 1 day | 2 | 2 | 2 | 2 | 2 | 4 | 3 | 3 |
| Whiteness (L) after 1 day | 95.6 | 95 | 95.8 | 94.9 | 76.7 | 93.9 | 94.8 | 76.8 |
| Yellowness (b) after 1 day | 7.0 | 7.7 | 6.8 | 6.3 | 64.2 | 9.9 | 8.0 | 61.8 |
| Gloss 60° | 28.7 | 22.8 | 50.6 | 10.0 | 35.5 | 60.6 | 38.9 | 59.8 |
| #Examples 12, 13 and 14 are comparative examples | | | | | | | | |

The results show that each of the clays tested (i.e. Laponite EP, RD and RDS, and Bentone LT) improves the tackiness of coatings prepared with waterborne alkyd resin systems. Laponite EP is most effective clay tested. The results show that the effect works for both interior and exterior stain.

The results also show that clay reduces the yellow hue which commonly arises with alkyd resins. Bentone LT is most effective, followed by Laponite EP and Laponite RDS.

Formulation 7 (1.5 wt% Laponite EP), 12# (0 wt% Laponite EP), and 13# (0.75 wt% Laponite EP), show the concentration effect of added clay. More clay reduces tackiness. For white coatings, elevated concentration of clay also increases whiteness and reduces yellowness.

## Claims

**1.** A coating composition comprising:

(i) at least one oxidative drying alkyd resin;
(ii) at least one clay; and
(iii) water;

wherein said composition has a solids content of less than 35 wt%, and preferably a solids content of less than 35 vol%.

2. A composition as claimed in claim 1, wherein said alkyd resin comprises:

(i) a polycarboxylic acid and/or anhydride selected from o-phthalic acid, isophthalic acid, adipic acid, succinic acid, terephthalic acid, 1,4-cyclohexanedicarboxylic acid, hexahydrophthalic acid, dimer fatty acid, succinic anhydride, o-phthalic anhydride, hexahydrophthalic anhydride and maleic anhydride;
(ii) a polyol selected from pentaerythritol, di-pentaerythritol, glycerol, ethylene glycol, propylene glycol, 1,4-cyclohexane dimethanol, trimethylol propane and 2-butyl-2-ethyl-1,3-propanediol;
(iii) unsaturated fatty acids selected from linolenic, linoleic, oleic, myristoleic, palmitoleic, arachidonic, erucic, gadoleic, clupanadonic, ricinoleic, licanic, nisinic, eleostearic, stearidonic, eicosapentaenoic, docosahexaenoic, docosatetraenoic, vaccenic, paullinic, elaidic, gondoic, nervonic and mead acids, soy bean fatty acid, tall oil fatty acid, or mixtures thereof; and
(iv) optionally monocarboxylic acids selected from acetic acid, propionic acid, dimethylolpropionic acid, benzoic acid, tetrahydrobenzoic acid and 4-tert-butyl-benzoic acid.

3. A composition as claimed in claim 1 or 2, wherein said alkyd resin has an oil length of 40 to 85 wt% and more preferably 55-85 wt%.

4. A composition as claimed in any one of claims 1 to 3, wherein said clay is in the form of plates or discs having a mean diameter of 20 to 250 nm.

5. A composition as claimed in any one of claims 1 to 4, wherein said composition comprises 0.75-5.0 wt% clay, based on the total weight of the composition.

6. A composition as claimed in any one of claims 1 to 5, wherein said composition comprises at least 50 wt% water and preferably 55 to 90 wt% water, based on the total weight of the solvent present in the coating composition.

7. A composition as claimed in any one of claims 1 to 6, wherein said composition comprises at least one thickener selected from polysaccharide thickeners and associative thickeners.

8. A composition as claimed in claim 7, wherein said thickener is different to said clay present in the composition.

9. A method for preparing a composition as claimed in any one of claims 1 to 8, comprising mixing:

(i) at least one oxidative drying alkyd resin;
(ii) at least one clay; and
(iii) water.

10. A stain, varnish, lacquer or glaze, comprising a composition as claimed in any one of claims 1 to 8.

11. A container comprising a composition as claimed in any one of claims 1 to 8.

12. A surface having a film thereon, wherein said film comprises the composition as claimed in any one of claims 1 to 8.

13. An article comprising a film on at least a part of a surface thereof, wherein said film comprises the composition as claimed in any one of claims 1 to 8.

14. A method of providing a coating on an article, wherein said method comprises:

applying a composition as claimed in any one of claims 1 to 8 to at least a part of a surface of said article; and drying and/or curing said composition to form a film on said surface.

15. Use of a composition as claimed in any one of claims 1 to 8 for forming a film on at least a part of a surface of an article.

Europäisches Patentamt
European Patent Office
Office européen des brevets

# EUROPEAN SEARCH REPORT

Application Number
EP 17 19 6061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 515 689 A (BRANE RALPH M ET AL) 2 June 1970 (1970-06-02) * example I * ----- | 1,4,9-15 | INV. C09D167/08 |
| X | US 3 230 162 A (GILCHRIST ALLAN E) 18 January 1966 (1966-01-18) * examples 2-3 * ----- | 1-6,9-15 | |
| X | US 2012/136105 A1 (GEBHARD MATTHEW S [NL] ET AL) 31 May 2012 (2012-05-31) * paragraph [0060]; example 1 * ----- | 1,4,7-15 | |
| | | | TECHNICAL FIELDS SEARCHED (IPC) |
| | | | C09D |

The present search report has been drawn up for all claims

1

| Place of search | Date of completion of the search | Examiner |
|---|---|---|
| The Hague | 27 March 2018 | Dalet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 19 6061

This annex lists the patent family members relating to the patent documents cited in the above-mentioned European search report. The members are as contained in the European Patent Office EDP file on The European Patent Office is in no way liable for these particulars which are merely given for the purpose of information.

27-03-2018

| Patent document cited in search report | Publication date | Patent family member(s) | Publication date |
|---|---|---|---|
| US 3515689 A | 02-06-1970 | US 3483109 A<br>US 3515689 A | 09-12-1969<br>02-06-1970 |
| US 3230162 A | 18-01-1966 | NONE | |
| US 2012136105 A1 | 31-05-2012 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Alkyd Resin Technology. John Wiley & Sons Inc, 1962
- **T. C. PATTON.** Alkyd Resin Technology. John Wiley & Sons Inc, 1962